# EUROPEAN PATENT APPLICATION

(11) **EP 4 674 994 A1**
(43) Date of publication of application: **07.01.2026**
(21) Application number: 24306132.2
(22) Date of filing: 05.07.2024
(51) Int. Cl.: C22B 3/44, C22B 7/00, C22B 7/02, C22B 3/00, C22B 47/00, C01G 45/00, C01G 45/02, C01G 51/06, C01G 53/06

(54) **PROCESS FOR MANUFACTURING A CRYSTALLIZED METAL SALT**

(71) Applicant: UNIVERSITE CLAUDE BERNARD - LYON 1, 69100 Villeurbanne (FR); Centre National de la Recherche Scientifique, 75016 Paris (FR); Mecaware, 69210 Bully (FR)
(72) Inventor: ERBLAND, Guillaume, 69100 VILLEURBANNE (FR); DUCREUX, Maxime, 42640 SAINT FORGEUX LESPINASSE (FR); ULM, Franck, 69007 LYON (FR); LECLAIRE, Julien, 69620 THEIZE (FR)
(74) Representative: Cabinet Becker et Associés

(57) **Abstract**

The present application relates to a process for purifying metal salts, and to a process for separating a metal from a polymetallic mixture by crystallizing a metal salt. The processes according to the invention allow obtaining crystallized carbonate-containing metal salts with high purity and high crystallinity.

## Description

### TECHNICAL FIELD

The invention relates to the field of the purification of metal salts, especially to the field of the separation of a metal from a mixture of different metals, by purification and crystallization of a desired metal salt.

### TECHNICAL BACKGROUND

Energy storage has become a global issue and a major challenge. Since the 1980s, the annual world consumption of oil has become greater than the quantities of new deposits discovered. It is therefore necessary to turn to other sources of energy, such as renewable energies, and to develop technologies for the storage of these energies in order to better manage these resources. Efforts to reduce oil consumption are particularly linked to the development of electric vehicles and batteries. While Lithium-ion batteries are now commonly used in computers and mobile phones, there remains some limitations for large-scale applications like electric vehicles. In particular, such applications require high amounts of strategic metals, such as cobalt or rare earth metals, which are expensive. The development of effective and selective recycling processes is therefore crucial in this field.

To date, few methods for capturing and separating strategic metals, such as those contained in batteries, have been developed.

Most methods developed up to date involve acidic leaching of metals from black mass originating from end of life batteries, affording liquid samples comprising mixtures of metals, and further separation steps of each metal involving numerous chemical additives and producing substantial amounts of effluents.

However, ecological and economic concerns justify the need for battery recycling processes involving as low as possible amounts of chemical additives, and generating as low as possible effluents amounts. More generally, other recycling fields require the need for purifying, separating and/or crystallizing metal salts.

Thus, there remains a need to provide processes for easily purifying metal salts and separating them from mixtures containing different metals. Advantageously, such processes should allow increasing the purity and/or the crystallinity of the metal salt. Even more preferred would be processes that would in addition require low amounts of chemical additives, and/or produce low amounts of effluents.

### SUMMARY OF THE INVENTION

In this respect, the inventors have surprisingly evidenced that a simple process involving the use of carbon dioxide allows an easy and efficient purification of metal salts, especially from mixtures containing different metals. The purified metal salt is obtained as a crystallized salt with a high crystallinity. The developed process involves no or little chemical additives, and generate no or little effluents. The developed process has the further advantage of using and valorizing carbon dioxide, which is a waste of human activity.

Thus, the present invention first relates to a process for manufacturing a crystallized carbonate-containing metal salt, comprising the steps of:
a) Suspending an inorganic metal salt in a solvent, preferably an aqueous solvent, in particular water, to form a suspension;
b) Contacting the suspension obtained in step a) with CO₂, preferably gaseous CO₂, to obtain a solution or a suspension;
c) Recovering the liquid phase of the solution or suspension obtained in step b);
d) Crystallizing at least one carbonate-containing metal salt by desorbing CO₂ from the liquid phase recovered in step c) to obtain a suspension; and
e) Recovering the crystallized carbonate-containing metal salt obtained in step d).

In some embodiments, step b) is implemented with gaseous CO₂ is at a pressure higher than atmospheric pressure.

In some embodiments, crystallizing step d) is implemented by heating and/or depressurizing.

In some embodiments, recovering step c) is implemented by solid/liquid separation, such as by filtration or centrifugation.

In some embodiments, recovering step e) is implemented by solid/liquid separation, such as by filtration or centrifugation, preferably by hot filtration.

In some embodiments, the metal is selected from the group consisting of nickel, manganese, cobalt and copper, preferably the metal is nickel, cobalt or manganese.

In some embodiments, the carbonate-containing metal salt is a hydroxycarbonate salt or a carbonate salt.

In some embodiments, the process comprises a preliminary step o), before step a), of forming the inorganic metal salt.

In some embodiments, the preliminary step o) is implemented by contacting a different inorganic salt of said metal with a base, such as ethylenediamine, until a pH higher than 10 is obtained.

The present invention further relates to a process for separating a metal from a mixture comprising at least two different metals, comprising the steps of
a'. Suspending a mixture comprising at least one metal salt in a solvent, preferably an aqueous solvent, in particular water, to form a suspension;
b'. Contacting the suspension obtained in step a') with gaseous CO₂, to obtain a solution or a suspension;
c'. Recovering the liquid phase of the solution or suspension obtained in step b');
d'. Crystallizing at least one carbonate-containing metal salt by desorbing CO₂ from the liquid phase recovered in step c') to obtain a suspension; and
e'. Recovering the crystallized carbonate-containing metal salt obtained in step d').

In some embodiments, the mixture comprises at least two, at least three, at least four, at least five or at least six different metals.

In some embodiments, the mixture is selected from the group consisting of:
- a binary mixture of nickel and copper salts,
- a binary mixture of nickel and manganese salts,
- a binary mixture of nickel and cobalt salts,
- a binary mixture of cobalt and manganese salts,
- a binary mixture of copper and manganese salts,
- a binary mixture of manganese and lithium salts,
- a binary mixture of cobalt and copper salts,
- a ternary mixture of nickel, copper and manganese salts,
- a ternary mixture of nickel, manganese and cobalt, and
- a multielement mixture of nickel, cobalt, lithium, copper and manganese salts, and a multielement mixture of nickel, cobalt, lithium, copper, aluminum and manganese salts.

In some embodiments, the process further comprises a step b'1) after step b') of recovering the solid phase of the suspension obtained in step b').

In some embodiments, the process comprises a preliminary step o'), before step a'), of forming the basic inorganic metal salt.

In some embodiments, the preliminary step o') is implemented by contacting a different inorganic salt of said metal with a base, such as ethylenediamine, until a pH higher than 10 is obtained.

### DETAILED DESCRIPTION OF THE INVENTION

### Process for manufacturing a crystallized metal salt

The first object of the invention is a process for manufacturing a crystallized carbonate-containing metal salt, comprising the steps of:
a) Suspending an inorganic metal salt in a solvent, preferably an aqueous solvent, in particular water, to form a suspension;
b) Contacting the suspension obtained in step a) with gaseous CO₂, to obtain a solution or a suspension;
c) Recovering the liquid phase of the solution or suspension obtained in step b);
d) Crystallizing at least one carbonate-containing metal salt by desorbing CO₂ from the liquid phase recovered in step c) to obtain a suspension; and
e) Recovering the crystallized carbonate-containing metal salt obtained in step d).

In some embodiments, the process is implemented a single time, and the carbonate-containing metal salt recovered at step e) preferably presents satisfying purity and/or crystallinity, preferably both.

In some embodiments, the process is implemented consecutively several times, until the desired purity and/or crystallinity of the carbonate-containing metal salt is obtained. For instance, the process may be implemented two, three, four, five or even more than five, consecutive times. In such iterative processes, the crystallized carbonate-containing salt obtained at step d) and/or recovered at step e) of an iteration of the process is preferably used as inorganic metal salt used in step a) of the further iteration of the process.

The process allows increasing the purity and/or the crystallinity of the recovered carbonate-containing metal salt, preferably both, in comparison with those of the initial metal salt.

### Carbonate containing metal salt

According to the present invention, a "*carbonate-containing metal salt*" is a salt of a metallic element, said salt comprising at least one carbonate CO₃²⁻ ion in its structure. In some embodiments, the carbonate-containing metal salt is a carbonate salt or a hydroxycarbonate salt, *ie* a salt comprising at least one carbonate CO₃²⁻ ion and at least one hydroxy HO⁻ ion in its structure. When the carbonate-containing salt comprises other ions than the metal ion(s) and the carbonate ion(s), the relative amounts of the carbonate ion and the other ions may vary in a wide range. In some embodiments, the carbonate-containing salt of a metal M is of formula M(CO₃)ₓ(OH)_{y}, wherein x is higher than zero, and y is zero or more. In such embodiments, x+y is equal to the valency of the metal M. The content in carbonate of the carbonate-containing metal salt may vary in a wide range from 0.01% to 100%, preferably from 0.1% to 100%, more preferably from 1% to 100%, even more preferably from 10% to 100%. The content is expressed in terms of moles of carbonate ion relative to the total of moles of all counterions in the obtained carbonate-containing metal salt.

According to the present invention, a "*metal*" or a "*metallic element*" is an element which atoms are bonded via metallic bonds. Metals are characterized by a continuum of energy levels between the valence band, occupied by the valence electrons, and the conduction band, occupied by the free electrons, so that the latter are thermally injected from the valence band beyond the Fermi level, ensuring the formation of a delocalized metallic bond throughout the volume of the metal. In some embodiments, the metal is a transition metal. In some embodiments, the metal is selected from the group consisting of nickel, manganese and cobalt, preferably it is nickel or manganese. In some other embodiments, the metal is a metal different from a transition metal, such as lithium.

According to the present invention, a "*crystallized*" salt is a salt in solid form, which presents an ordered arrangement of atoms, contrary to amorphous salts, which present only disordered atoms. A salt may be considered as "*crystallized*" if its crystallinity (also referred to as "*degree of crystallinity*") is strictly higher than 0. Preferably, the crystallinity of the crystallized salt in the present invention is higher than 50%, 60%, 70%, more preferably higher than 80%. A salt may be analyzed as being crystallized (or crystalline) by any suitable technique known in the art, such as by powder X-ray diffraction or calorimetric techniques.

The process for manufacturing a crystallized carbonate-containing metal salt from a metal salt may also be considered as a recrystallisation process of a metal salt, or a process for increasing the crystallinity of a metal salt, especially when the inorganic metal salt used at step a) is the same as the crystallized carbonate-containing metal salt recovered at step e). Typically, the crystallinity of the carbonate-containing metal salt recovered at step e) is higher than the crystallinity of the inorganic metal salt used at step a).

The process for manufacturing a crystallized carbonate-containing metal salt from a metal salt may also be considered as a purifying process of a metal salt, or a process for increasing the purity of a metal salt, especially when the inorganic metal salt used at step a) is the same as the crystallized carbonate-containing metal salt recovered at step e). Typically, the purity of the carbonate-containing metal salt recovered at step e) is higher than the purity of the inorganic metal salt used at step a).

The purity of the crystallized carbonate-containing metal salt recovered at step (e) may vary in a wide range depending among others on the metal, the other ions of the metal salt, and the other components present in the mixture.

In some embodiments, the purity of the crystallized carbonate-containing metal salt recovered at step (e) is higher than 60%, higher than 70%, higher than 80%, preferably higher than 90% or even higher than 98%. The purity is calculated in terms of number of moles of metal M relative to the total number of moles of metals in the recovered salt (molar fraction).

Molar fractions may be determined by any suitable technique in the art. Molar fractions may be determined for instance by Inductively Coupled Plasma Optical Emission Spectrometry (ICP-OES).

In some embodiments, the purity of the crystallized carbonate-containing metal salt recovered at step (e) is at least 7%, at least 10% or preferably at least 15%, higher than the purity of the inorganic salt in the suspension of step a).

### Step a - formation of a suspension

Step a) consists in forming a suspension of an inorganic salt of a metal M in a solvent, preferably an aqueous solvent.

The inorganic salt may be any inorganic salt. In some embodiments, the inorganic salt is a hydroxide, a carbonate or a hydroxycarbonate salt of M. In some embodiments, the inorganic salt is the same salt of M as the carbonate-containing salt recovered at step e). In other embodiments, the inorganic salt is a different salt of M from the salt carbonate-containing salt recovered at step e). In some embodiments, the inorganic salt is a basic inorganic salt.

The metal M of the inorganic salt of step a) is the same as the metal of the carbonate-containing metal salt recovered at step e).

The crystallinity of the inorganic salt is not limited. In some embodiments, preferably when the crystallinity is to be increased by the process according to the invention, the crystallinity of the inorganic salt is lower than 100%, preferably lower than 80%, more preferably lower than 75%. In some embodiments, the crystallinity of the inorganic salt is lower than 50%. In some embodiments, the inorganic salt is amorphous.

In some embodiments, the inorganic salt is obtained *in situ* by a chemical reaction in the solvent, preferably the aqueous solvent. For instance, the inorganic salt may be obtained *in situ* by modifying the pH of the suspension. In some embodiments, the inorganic salt is a hydroxide containing salt, preferably a hydroxide salt, and the inorganic salt is obtained by increasing the pH of an aqueous suspension or solution of a different salt of M. The pH is preferably increased by addition of a base, such as sodium hydroxide, lithium hydroxide or ethylene diamine.

Preferably, the pH is increased to a value higher than 7, higher than 8, higher than 9, preferably higher than 10. In such embodiments, the suspending of step a) may be simply implemented by formation of the salt in the solvent, preferably under stirring.

The concentration of the inorganic salt in the suspension may vary in a wide range. In some embodiments, the concentration of the metallic salts in the suspension at step a) is comprised between 2.5 g/L and 50 g/L. In some embodiments, the concentration of the inorganic salt in the suspension is comprised between 0.05 mol/L and 0.5 mol/L, preferably between 0.1 mol/L and 0.3 mol/L.

In some embodiments, the inorganic salt is present in the suspension with at least one other metallic element, preferably at least one other metal salt. In some embodiments, the suspension comprises at least 2 metals, at least 3 metals, at least 4 metals, at least 5 metals or at least 6 metals. In some embodiments, the suspension comprises 2 metals, 3 metals, 4 metals, 5 metals or 6 metals. In some embodiments, the suspension is a binary mixture or a ternary mixture.

The purity of the inorganic salt in the suspension may vary in a wide range. In some embodiments, the purity of the inorganic salt is lower than 80%, preferably lower than 75%, more preferably 50% or less. The purity is calculated in terms of number of moles of metal M relative to the total number of moles of metals in the suspension (molar fraction).

The solvent of the suspension obtained at step a) is preferably an aqueous solvent or a water-miscible solvent. Preferably, the solvent comprises water, more preferably it consists of water. Water is preferably demineralized water, preferably ultrapure water.

The pH of the suspension obtained at step a) may vary depending among others of the metal salts present in the suspension, and their amounts. In some embodiments, the pH of the suspension is at least 7, at least 8, at least 9, preferably at least 10.

Step a) is preferably performed at room temperature. Step a) may be performed under air or under inert atmosphere, such as nitrogen or argon atmosphere.

### Step b: contacting with CO₂

Step b) comprises contacting the suspension obtained at step a) with carbon dioxide. Carbon dioxide may be used in any form, such as liquid, solid or gaseous carbon dioxide. Preferably, carbon dioxide is used as gaseous carbon dioxide.

In some embodiments, the gaseous carbon dioxide is at atmospheric pressure (ca 1 bar). In some other embodiments, the gaseous carbon dioxide is at a pressure higher than atmospheric pressure. In some embodiments, the gaseous carbon dioxide is at a pressure comprised between 1.1 bar and 60 bars, preferably between 5 bars and 50 bars, more preferably between 10 bars and 40 bars.

Step b) is preferably performed at room temperature.

In some embodiments, step b) is implemented under a flow of carbon dioxide, with any suitable flow rate. In some embodiments, the flow rate of carbon dioxide is comprised between 0.1 mL/min and 10 mL/min. In some embodiments, the flow rate of carbon dioxide is comprised between 0.2 mL/min and 0.4 mL/min.

Carbon dioxide may be contacted with the suspension for instance by bubbling a flow of carbon dioxide in the suspension.

The duration of contacting step b) may vary in a wide range. In some embodiments, contacting step b) is implemented for a duration comprised between 5 minutes and 40 hours, preferably between 1 hour and 20 hours.

The suspension is preferably stirred during step b). One skilled in the art may select the suitable stirring conditions depending among others on the volume of solvent and the amount of solid in the suspension. In some embodiments, the suspension is stirred at a speed comprised between 500 rpm and 1000 rpm, preferably a speed of ca 800 rpm.

Step b) triggers solubilization of at least part of the metal salts in the solvent, preferably the aqueous solvent. In some embodiments, step b) triggers solubilization of all the metal salts in the solvent, and thus a solution is obtained. In some other embodiments, only part of the metals salts are solubilized at step b), and thus a suspension is obtained. In some embodiments, step b) is implemented until all salts are solubilized in the solvent.

The carbon dioxide used in the process of the invention (in particular in step b) can result from a human activity, of which it represents a waste product; for example, it can originate from combustion flue gases, refinery gas, cement works gas or blast furnace gas.

The use of gaseous carbon dioxide allows both the use of a waste product, and the generation of no effluents, which is in line with current ecological concerns.

### Recovering step c)

Step c) consists in recovering the liquid phase of the solution or suspension obtained at step b). Step c) preferably comprises a step of separating the liquid phase and the solid phase of the suspension obtained at step b). Such separation may be implemented with any suitable solid-liquid separation technique known in the art. Separation of step c) may be for instance carried out by filtration, centrifugation, or reverse osmosis. In some embodiments, the separation of step c) is implemented by membrane filtration with a membrane, preferably a membrane with a pore size comprised between 0.1 and 0.5 µm, more preferably a membrane with a pore size of ca 0.22 µm.

More generally, each recovering and/or separating step of the process of the invention may be independently carried out by filtration, centrifugation, and/or reverse osmosis.

When step b) was implemented at a pressure higher than atmospheric pressure, step c) first comprises a sub-step of lowering the pressure to atmospheric pressure.

Step c) is preferably implemented at room temperature.

The solid recovered during the separation step may be independently recovered, washed and dried and optionally analyzed in terms of amount and composition.

In some embodiments, the solid recovered at step c), which contains at least one inorganic metal salt, is further re-treated with a process according to the invention, optionally by varying the conditions, in order to recover a greater amount of the desired carbonate-containing salt.

### Crystallizing step d)

Step d) consists in desorbing carbon dioxide from the liquid phase recovered at step c), preferably as a filtrate. Step d) may be implemented in any suitable conditions for desorbing carbon dioxide. In some embodiments, step d) is implemented by heating the liquid phase recovered at step c), preferably at a temperature of at least 50°C, more preferably under refluxing conditions. The heating of step d) may be implemented for any suitable duration for desorbing carbon dioxide. In some embodiments, desorption is implemented for a duration comprised between 30 minutes and 5 hours, preferably between 1 hour and 3 hours, more preferably ca 2 hours.

Carbon dioxide is desorbed from the liquid phase. Simultaneously, the carbonate-containing metal salt precipitates, and a suspension is obtained.

### Recovery step e)

Recovery step e) consists in separating the carbonate-containing metal salt from the liquid phase of the suspension obtained at step d).

Such separation may be implemented with any suitable solid-liquid separation technique known in the art. Separation of step e) may be for instance carried out by filtration, centrifugation, and/or reverse osmosis. In some embodiments, the separation of step e) is implemented by membrane filtration with a membrane, preferably a membrane with a pore size comprised between 0.1 and 0.5 µm, more preferably a membrane with a pore size of ca 0.22 µm.

Preferably, step e) is implemented by hot filtration. The temperature of the hot filtration is preferably the temperature of the suspension at the end of step d). In other words, no cooling step is preferably implemented between step d) and steps e).

In some embodiments, the solid recovered in step e) is further washed and dried. Washing may be performed with water and may be reiterated several times, such as 2 or 3 times.

The solid recovered at step e) has been demonstrated to be a crystallized carbonate-containing salt of metal M, with a high purity and a high crystallinity.

Another object of the present invention is a carbonate-containing metal salt obtained with a process according to the present invention.

### Process for separating a metal from a mixture

The process for manufacturing a crystallized carbonate-containing metal salt according to the invention may be advantageously used to separate a specific metal salt from a sample comprising several metal salts. It actually allows a simple and low resource-consuming recovery of the metal salt. In addition, the metal salt is recovered directly in crystallized form, which eases its recovery and further purification and/or uses.

In some embodiments, the sample comprising several metal salts may be originating from a battery, wastes from batteries production, effluents from steel industry or dairy industry, red mud, ores, or fly ash. In a particular embodiment, the liquid sample is a sample originating from a battery, for instance a nickel-metal hydride or Li-ion battery, or a component thereof (such as a battery cathode). More specifically, the liquid sample may be obtained by solubilizing or leaching a solid sample comprising the metal M as defined herein, said solid sample being typically from a battery, for instance a nickel-metal hydride or Li-ion battery, or a component thereof (such as a battery cathode).

It is within ordinary skill in the art to know the suitable conditions to be implemented, such as the suitable pH, temperature and/or pressure conditions, so as to selectively crystallize and/or precipitate the desired metal carbonate-containing salt.

In some embodiments, a chelating agent of at least one metal comprised in the mixture is used to selectively maintain in solution said at least one metal, and thus allow crystallizing another metal as a carbonate-containing salt with a process according to the invention. "*Chelating agents*" are chemical compounds with at least two functional groups that can engage with a metal ion to produce a ring structure known as a chelate ring. Among metal chelating agents may be cited diamines, such as ethylene diamine, polynucleic acids, polypeptides, proteins, polysaccharides, and amino acids. Chelating agents are well known in the art and their suitability can be easily adjusted to the used conditions.

In some embodiments, the process according to the invention is implemented consecutively several times with the same initial mixture. In some embodiments, the process is implemented several times in the same conditions, and the same crystallized carbonate-containing metal salt is obtained at the end of each iteration. In other embodiments, the process is implemented several times with different conditions, and different crystallized carbonate-containing metal salts are obtained at the end of each iteration.

All features and embodiments disclosed above for the process for manufacturing a crystallized metal salt apply similarly to the process for separating a metal from a mixture, such as a polymetallic mixture.

In the present application, the term "*about*" (or ca.) preceding a value is well-known to the skilled artisan and means that said value may vary to a certain extent depending on the context in which the term is used. If certain uses of this term are not clear to the skilled artisan depending on the context, then "about" means ± 20%, preferably ± 10% of said value.

Unless otherwise indicated, when a range is expressed by means of the expression "*comprised between*", the limit values are included within the range disclosed.

The invention will also be described in further detail in the following examples, which are not intended to limit the scope of this invention, as defined by the attached claims.

### EXAMPLES

### Materials and methods

All Ni recrystallization reactions were carried out in a Parr^{®} reactor (Hastelloy C276 of 100 mL) equipped with a half-shell closure and capable of withstanding a pressure of 200 bars and a temperature of 350 °C. All reactions were stirred using a mechanical arm driven by a 1/8 horsepower electric motor. All pressures applied to the system are measured using a Sparr needle gauge (0-70 bar). All reactions are carried out in ultrapure water whose resistivity is 18.2 MS2.cm at 25°C. During filtration, the membranes used have a porosity of 0.22 µm. Compositional analyzes of solids and liquids were carried out using either an ICP-OES 5800 VDV from Agilent^{®} or an ICP-OES 710ES from Varian^{®} at a concentration of 500 ppb using a HNO₃ matrix at 5% and an RSD (relative standard deviation) <5%. All samples were analyzed in triplicate at several wavelengths.

### General protocol for the purification of Ni in a mixture by recrystallization under a compressed CO₂ atmosphere.

The purification of (Ni) in binary Ni-metal or ternary Ni-metal-metal mixtures, the compositions of which were analyzed by ICP-OES before use, was carried out in five steps. The first step was to suspend the solids mixture in water. The suspension was then poured into a pressurizable reactor. For the third step, the suspension was stirred at 800 rpm under a pure CO₂ atmosphere at room temperature. At the end of the reaction, the fourth step was to depressurize the system and filter the suspension on a membrane. The resulting solid 1 was washed with 3 * 10 mL of water, dried in an oven at 90 °C for 16 h, weighed and analyzed by ICP-OES. Filtrate 1 was immediately taken up in a 250 mL flask equipped with a condenser and heated to reflux for 2 h to desorb the CO₂. The last step consisted in filtering the hot suspension through a membrane. The resulting solid 2 and filtrate 2 were washed with 3 * 10 mL of water (for solid 2 only), dried in an oven at 90 °C for 16 h (for solid 2 only), weighed and analyzed by ICP-OES.

### Example 1. Purification of nickel from binary mixtures

### Example 1a. Ni(CO₃)x(OH)y-CuLy mixture polluted with copper

The general protocol was applied with 4 different mixtures. Conditions of each experiment and obtained results are summarized in table 1 below. m represents the mass of mixture, C its concentration, Xi(N) the initial molar fraction of Ni, Xi(Cu) the initial molar fraction of Cu, Y2(Ni) the process molar yield and X₂(Ni) the final molar fraction of Ni in the second solid.

**Table 1: conditions and results of example 1a**

| Exp n° | m | C | Xi(Ni) | Xi(Cu) | Conditions | Y₂(Ni) | X₂(Ni) |
|---|---|---|---|---|---|---|---|
| 1 | 1.88 | 9.40g/L | 74.30% | 25.70% | 10 bars | 65% | 97.10% |
| | | | | | 3h | | |
| 2 | 1.88 | 9.40g/L | 80% | 20% | 10 bars | 65% | 97% |
| | | | | | 16h | | |
| 3 | 1.53g | 25.50g/L | 81.32% | 18.68% | 40 bars | 25% | 91.70% |
| | | | | | 3h | | |
| 4 | 0.1646g | 2.74g/L | 81.32% | 18.68% | 40 bars | 99.99% | 94.15% |
| | | | | | 3h | | |

The crystallinity of the solid 2 obtained in experiment n°2 was measured at 83%.

### Example 1b. Ni(CO₃)x(OH)y-MnCO₃ equimolar mixture

The general protocol was implemented with the conditions presented in table 2 below.

**Table 2: conditions and results of example 1b**

| Exp n° | m | C | Xi(Ni) | Xi(Mn) | Conditions | Y₂(Ni) | X₂(Ni) |
|---|---|---|---|---|---|---|---|
| 5 | 7.43g | 37.15g/L | 50% | 50% | 40 bars | 65.45% | 99.99% |
| | | | | | 3h | | |

### Example 1c. Ni(CO₃)x(OH)y-MnCO₃ mixture polluted with manganese

The general protocol was implemented with the conditions presented in table 3 below.

**Table 3: conditions and results of example 1c**

| Exp n° | m | C | Xi(Ni) | Xi(Mn) | Conditions | Y₂(Ni) | X₂(Ni) |
|---|---|---|---|---|---|---|---|
| 6 | 1.88g | 31.33g/L | 75% | 25% | 40 bars | 20% | 99.99% |
| | | | | | 3h | | |

### Example 1d. Ni(CO₃)x(OH)y-[Co(en)2(CO3)Cl] mixture polluted with cobalt

The general protocol was implemented with the conditions presented in table 4 below.

**Table 4: conditions and results of example 1d**

| Exp n° | m | C | Xi(Ni) | Xi(Co) | Conditions | Y₂(Ni) | X₂(Ni) |
|---|---|---|---|---|---|---|---|
| 7 | 1.67g | 27.80g/L | 80% | 20% | 40 bars | 19.39% | 99.99% |
| | | | | | 3h | | |

### Example 2. Purification of nickel from ternary and multielement mixtures

### Example 2a. Ni(CO₃)x(OH)y-MnCO₃-CoLx mixture polluted with manganese and cobalt

The general protocol was implemented with the conditions presented in table 5 below.

**Table 5: conditions and results of example 2a**

| Exp n° | m | C | Xi(Ni) | Xi(Mn) | Xi(Co) | Conditions | Y₂(Ni) | X₂(Ni) |
|---|---|---|---|---|---|---|---|---|
| 8 | 2.8g | 47g/L | 75% | 18.75% | 6.25% | 40 bars | 49.96% | 99.99% |
| | | | | | | 3h | | |

### Example 2b.Stoechiometric Ni(CO₃)x(OH)y-MnCO₃-CoCO₃ mixture

The general protocol was implemented with the conditions presented in table 6 below.

**Table 6: conditions and results of example 2b**

| Exp n° | m | C | Xi(Ni) | Xi(Mn) | Xi(Co) | Conditions | Y₂(Ni) | X₂(Ni) |
|---|---|---|---|---|---|---|---|---|
| 8bis | 0.49g | 8.16g/L | 33.33% | 33.33% | 33.33% | 40 bars | 89.47% | 84.31% |
| | | | | | | 3h | | |

### Example 2c. Ni-Co-Al-Li-Cu-Mn mixture polluted with decreasing amounts of cobalt, aluminum, lithium, copper and manganese

The general protocol was implemented with the conditions presented in table 7 below.

**Table 7: conditions and results of example 2c**

| Exp n° | m | C | Xi(Ni) | Xi (Co) | Xi(Al) | Xi(Li) | Xi(Cu) | Xi(Mn) | Conditions | Y₂(Ni) | X₂(Ni) |
|---|---|---|---|---|---|---|---|---|---|---|---|
| 9 | 1.5g | 25g/L | 87.57% | 6.21% | 2.76% | 2.38% | 0.82% | 0.26% | 40 bars | 37.03% | 94.69% |
| | | | | | | | | | 3h | | |

### Example 2d. Ni-Co-Li-Cu Al Mn Fe mixture polluted with decreasing amounts of cobalt, lithium, copper, aluminum, manganese and iron

The general protocol was implemented with the conditions presented in table 8 below

**Table 8: conditions and results of example 2d**

| Exp n° | m | C | Xi(Ni) | Xi (Co) | Xi(Li) | Xi(Cu) | Xi(Al) | Xi(Mn) | Xi(Fe) | Conditions | Y₂(Ni) | X₂(Ni) |
|---|---|---|---|---|---|---|---|---|---|---|---|---|
| 10 | 1.5g | 25g/L | 63.08% | 29.92% | 5.55% | 1.06% | 0.24% | 0.08% | 0.07% | 40 bars | 46.44% | 69.97% |
| | | | | | | | | | | 3h | | |

### Example 3. Purification of manganese from binary mixtures

### Example 3a. Mn-Ni(EDA) equimolar mixture

100 mL of an equimolar solution of manganese chloride tetrahydrate (0.1mol/L) and of nickel chloride hexahydrate (0.1 mol/L) at pH 2 was stirred under argon for 30 minutes. To this green solution was progressively added ethylenediamine (5 mL), until reaching pH 10.5. A precipitate of amorphous manganese hydroxide was obtained (Y₁(Mn)=57.2%, X₁(Mn)=99.84%). The blue suspension was then stirred under 1 bar CO₂ at 0.3mL/min for 2 hours. Manganese hydroxide re-dissolved and then a precipitate of manganese carbonate was obtained. The purple suspension was heated at 80°C in order to desorb CO₂ as hydrogencarbonate. The solution was hot filtered to obtain crystalline manganese carbonate, Y₂(Mn)=80.2% and X₂(Mn)=99.71%.

### Example 3b. Mn-Co equimolar mixture

100 mL of an equimolar solution of manganese chloride tetrahydrate (0.1mol/L) and of cobalt chloride hexahydrate (0.1 mol/L) at pH 2 was stirred under argon for 30 minutes. To this red solution was progressively added ethylenediamine (6 mL), until reaching pH 10.5. A precipitate of amorphous manganese hydroxide was obtained (Y₁(Mn)=27.8%, X₁(Mn)=85.7%). The red suspension was then stirred under 1 bar CO₂ at 0.3mL/min for 2 hours. Manganese hydroxide re-dissolved and then a precipitate of manganese carbonate was obtained. The purple suspension was heated at 80°C in order to desorb CO₂ as hydrogencarbonate. The solution was hot filtered to obtain crystalline manganese carbonate, Y₂(Mn)=92.7% and X₂(Mn)=82.60%.

### Example 3c. Mn-Co equimolar mixture

*1^{st} set of conditions:* 50 mL of an equimolar solution of manganese chloride tetrahydrate (0.1mol/L) and of cobalt chloride hexahydrate (0.1 mol/L) at pH 2 was stirred under argon for 30 minutes. To this red solution was progressively added ethylenediamine (3 mL), until reaching pH 10.5. The red suspension was then heated to 80°C and stirred under 1 bar CO₂ for 30 minutes. The solution was hot filtered to obtain crystalline manganese carbonate, Y₂(Mn)=78.6% and X₂(Mn)=95.52%.

*2^{nd} set of conditions:* 50 mL of an equimolar solution of manganese chloride tetrahydrate (0.1mol/L) and of cobalt chloride hexahydrate (0.1 mol/L) at pH 2 was stirred under argon for 30 minutes. To this red solution was progressively added ethylenediamine (3 mL), until reaching pH 10.5. The red suspension was then heated to 80°C and stirred under 3 bar CO₂ for 30 minutes. The solution was hot filtered to obtain crystalline manganese carbonate, Y₂(Mn)=80.49% and X₂(Mn)=99.85%.

### Example 3d. Mn-Cu equimolar mixture

100 mL of an equimolar solution of manganese chloride tetrahydrate (0.1mol/L) and of copper chloride (0.1 mol/L) at pH 2 was stirred under argon for 30 minutes. To this red solution was progressively added ethylenediamine (4.5 mL), until reaching pH 10.5. A precipitate of amorphous manganese hydroxide was obtained (Y₁(Mn)=42.9%, X₁(Mn)=99.14%). The red suspension was then stirred under 1 bar CO₂ at 0.3mL/min for 2 hours. Manganese hydroxide re-dissolved and then a precipitate of manganese carbonate was obtained. The purple suspension was heated at 80°C in order to desorb CO₂ as hydrogencarbonate. The solution was hot filtered to obtain crystalline manganese carbonate, Y₂(Mn)=88.97% and X₂(Mn)=99.96%.

### Example 3e. Mn-Li equimolar mixture

100 mL of an equimolar solution of manganese chloride tetrahydrate (0.1mol/L) and of lithium chloride (0.1 mol/L) at pH 2 was stirred under argon. To this solution was progressively added ethylenediamine (3 mL), until reaching pH 10.5. A precipitate of amorphous manganese hydroxide was obtained (Y₁(Mn)=60.03%, X₁(Mn)=95.75%). The red suspension was then stirred under 1 bar CO₂ at 0.3mL/min for 2 hours. Manganese hydroxide re-dissolved and then a precipitate of manganese carbonate was obtained. The purple suspension was heated at 80°C in order to desorb CO₂ as hydrogencarbonate. The solution was hot filtered to obtain crystalline manganese carbonate, Y₂(Mn)=87.6% and X₂(Mn)=96.70%.

### Example 3f. Mn-Ni(NH₃) equimolar mixture

100 mL of an equimolar solution of manganese chloride tetrahydrate (0.1mol/L) and of nickel chloride hexahydrate (0.1 mol/L) at pH 2 was stirred under argon for 30 min. To this green solution was progressively added ammonia (12 mL), until reaching pH 10.5. A precipitate of amorphous manganese hydroxide was obtained (Y₁(Mn)=97.45%, X₁(Mn)=78.93%). The blue suspension was then stirred under 1 bar CO₂ at 0.3mL/min for 2 hours. Manganese hydroxide re-dissolved and then a precipitate of manganese carbonate was obtained. The purple suspension was heated at 60°C in order to desorb CO₂ as hydrogencarbonate. The solution was hot filtered to obtain crystalline manganese carbonate, Y₂(Mn)=91.72% and X₂(Mn)=78.79%.

### Example 4. Purification of manganese from ternary mixtures

### Example 4a. Ni-Mn-Co mixture

100 mL of an equimolar solution of nickel chloride tetrahydrate (0.3 mol/L), of manganese chloride hexahydrate (0.1 mol/L) and of cobalt chloride hexahydrate (0.1 mol/L) at pH 1.3 was stirred under argon for 30 min. To this solution was progressively added ethylenediamine (12 mL), until reaching pH 10.6. A precipitate of amorphous manganese hydroxide was obtained (Y₁(Mn)=63.5%, X₁(Mn)=49.3%). The red suspension was then stirred under 1 bar CO₂ at 0.3mL/min for 2 hours. Manganese hydroxide re-dissolved and then a precipitate of manganese carbonate was obtained. The purple suspension was heated at 80°C in order to desorb CO₂ as hydrogencarbonate. The solution was hot filtered to obtain crystalline manganese carbonate, Y₂(Mn)=90.2% and X₂(Mn)=94.80%.

### Example 5. Purification of cobalt from binary mixtures

*1^{st} set of conditions:* A CoCO₃-CuLₓ binary mixture (0.150 g, 2.5 g/L, Xi(Co)=70%, Xi(Cu)=30%) was suspended in 60 mL ultrapure water and placed in the reactor. The brown suspension was stirred under 40 bars CO₂ for 3 hours. After filtration and CO₂ desorption, analysis of the second recovered solid provided Y₂(Co)=66% and X₂(Co)=80.79%.

*2^{nd} set of conditions:* A CoCO₃-CuLₓ binary mixture (0.200 g, 3.4 g/L, Xi(Co)=70%, Xi(Cu)=30%) was suspended in 60 mL ultrapure water and placed in the reactor. The brown suspension was stirred under 40 bars CO₂ for 3 hours. After filtration and CO₂ desorption, analysis of the second recovered solid provided Y₂(Co)=78.05% and X₂(Co)=86.29%.

## Claims

1. Process for manufacturing a crystallized carbonate-containing metal salt, comprising the steps of:
a) Suspending an inorganic metal salt in a solvent, preferably an aqueous solvent, in particular water, to form a suspension;
b) Contacting the suspension obtained in step a) with CO₂, preferably gaseous CO₂, to obtain a solution or a suspension,
c) Recovering the liquid phase of the solution or suspension obtained in step b);
d) Crystallizing at least one carbonate-containing metal salt by desorbing CO₂ from the liquid phase recovered in step c) to obtain a suspension, and
e) Recovering the crystallized carbonate-containing metal salt obtained in step d).

2. Process according to claim 1, wherein step b) is implemented with gaseous CO₂ at a pressure higher than atmospheric pressure.

3. Process according to claim 1 or claim 2, wherein crystallizing step d) is implemented by heating and/or depressurizing.

4. Process according to any one of claims 1 to 3, wherein recovering step c) is implemented by solid/liquid separation, such as by filtration or centrifugation.

5. Process according to any one of claims 1 to 4, wherein recovering step e) is implemented by solid/liquid separation, such as by filtration or centrifugation, preferably by hot filtration.

6. Process according to any one of claims 1 to 5, wherein the metal is selected from the group consisting of nickel, manganese, cobalt and copper, preferably the metal is nickel, cobalt or manganese.

7. Process according to claim 5, wherein the carbonate-containing metal salt is a hydroxycarbonate salt or a carbonate salt.

8. Process according to any one of claims 1 to 7, comprising a preliminary step o), before step a), of forming the inorganic metal salt.

9. Process according to claim 8, wherein the preliminary step o) is implemented by contacting a different inorganic salt of said metal with a base, such as ethylenediamine, until a pH higher than 10 is obtained.

10. Process for separating a metal from a mixture comprising at least two different metals, comprising the steps of
a'. Suspending a mixture comprising at least one metal salt in a solvent, preferably an aqueous solvent, in particular water, to form a suspension;
b'. Contacting the suspension obtained in step a') with CO₂, preferably gaseous CO₂, to obtain a solution or a suspension ,
c'. Recovering the liquid phase of the solution or suspension obtained in step b');
d'. Crystallizing at least one carbonate-containing metal salt by desorbing CO₂ from the liquid phase recovered in step c') to obtain a suspension, and
e'. Recovering the crystallized carbonate-containing metal salt obtained in step d').

11. Process according to claim 10, wherein the mixture comprises at least two, at least three, at least four, at least five or at least six different metals.

12. Process according to claim 10 or claim 11, wherein the mixture is selected from the group consisting of:
- a binary mixture of nickel and copper salts,
- a binary mixture of nickel and manganese salts,
- a binary mixture of nickel and cobalt salts,
- a binary mixture of cobalt and manganese salts,
- a binary mixture of copper and manganese salts,
- a binary mixture of manganese and lithium salts,
- a binary mixture of cobalt and copper salts,
- a ternary mixture of nickel, copper and manganese salts,
- a ternary mixture of nickel, manganese and cobalt,
- a multielement mixture of nickel, cobalt, lithium, copper and manganese salts, and
- a multielement mixture of nickel, cobalt, lithium, copper, aluminum and manganese salts.

13. Process according to any one of claims 10 to 12, wherein the process further comprises a step b'1) after step b') of recovering the solid phase of the suspension obtained in step b').

14. Process according to any one of claims 10 to 13, comprising a preliminary step o'), before step a'), of forming the basic inorganic metal salt.

15. Process according to claim 14, wherein the preliminary step o') is implemented by contacting a different inorganic salt of said metal with a base, such as ethylenediamine, until a pH higher than 10 is obtained.
